# EUROPEAN PATENT SPECIFICATION

(11) **EP 0 502 646 B1**
(45) Date of publication and mention of the grant of the patent: **17.05.1995**
(21) Application number: 92301626.5
(22) Date of filing: 26.02.1992
(51) Int. Cl.: G11B 5/48, G11B 21/16

(54) **Head carriage assembly**
Kopfwagenanordnung
Assemblage de chariot support de tête

(30) Priority: 07.03.1991 JP 65360/91
(43) Date of publication of application: 09.09.1992
(73) Proprietor: International Business Machines Corporation, Armonk, N.Y. 10504 (US)
(72) Inventor: Aoyagi, Akihiko, Yamato-shi, Kanagawa-ken (JP); Coffey, Jerry T., Oronoco, Minnesota 55960 (US); Satoh, Kiyoshi, Fujisawa-shi, Kanagawa-ken (JP)
(74) Representative: Burt, Roger James, Dr.

(56) References cited:
- EP-A- 0 254 558
- DE-A- 3 940 105

## Description

This invention relates to head carriage assemblies which carry at least one head and are driven by a lead positioning device for positioning the head to a target position on a disk.

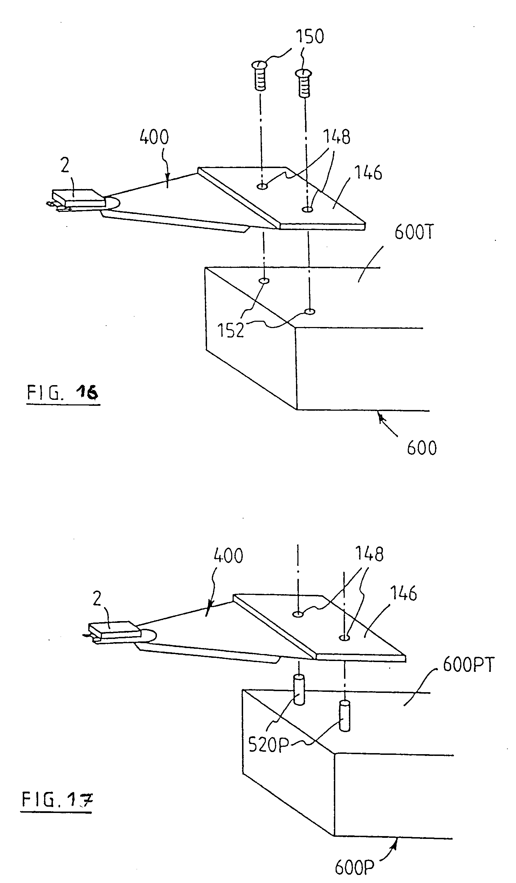

In a head carriage assembly according to prior art (Fig.16), a suspension 400 suspending a head slider 2 which contains a magnetic head at its one end, is fixed at its other end to the top surface of a rigid arm 600 made of aluminium die casting. The suspension 400 is fixed to the arm 600 by screws 150 passing through holes 148 made in a mounting plate 146 for the suspension 400 into screw holes 152 formed on the top surface 600T of the arm 600. US-A-4,167,765 discloses that the suspension is attached to the top surface of the rigid arm by screws.

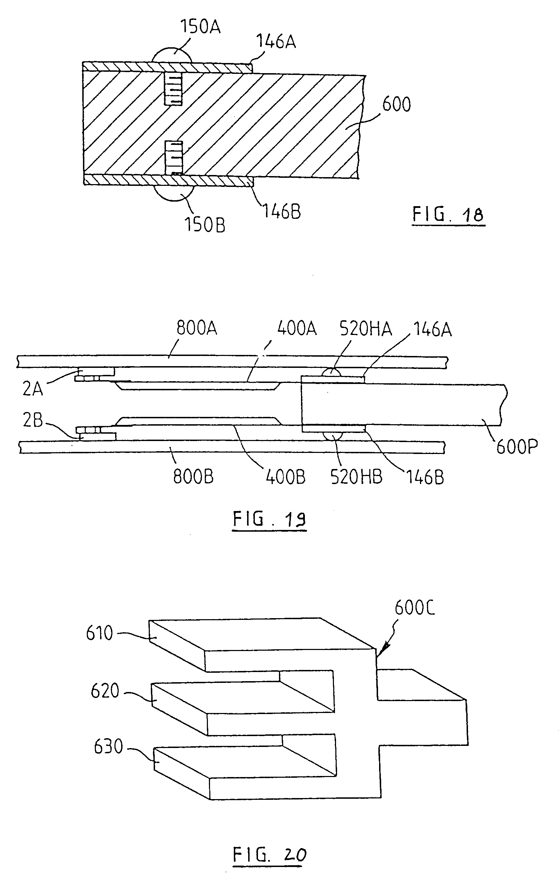

In another example of a head carriage assembly according to prior art (Fig.17) a rigid arm 600P made of plastics material has bosses 520P also of plastics material formed unitarially on the top surface 600PT. The bosses 520P penetrate holes 148 in a mounting plate 146 for a suspension 400 and protrude from the mounting plate 146. The bosses are molten by hot staking, and are solidified to a state where their ends expand, and thus the suspension 400 is fixed to the arm 600P.

As shown in FIG.16, if the suspension 400 is fixed to the arm 600 by the screws 150, the heads of the screws 150 protrude from the mounting plate 146. Accordingly, the space between disks or the distance between a head carriage assembly and a housing case cannot be reduced. Moreover, as the screw holes 152 made in the arm 600 need internal screw portions, there is a limit to reducing the thickness of the arm 600 itself. As shown in FIG.18, if a mounting plate 146A for a first suspension and a mounting plate 146B for a second suspension are fixed to the top surface and tie bottom surface of an arm 600 by screws 150A and 150B, respectively, the thickness of tie arm 600 must be set so that the bottom ends of the screws 150A and 150B do not come in contact with each other. This means that not only the thickness of the head carriage assembly but the thickness of a magnetic storage device cannot be reduced.

As shown in FIG.17, if the suspension 400 is fixed to the arm 600P by hot staking, it becomes impossible to reduce the space between disks or the distance between a head carriage assembly and a housing case due to the projection produced by hot staking. Particularly, as in FIG.19, if mounting plates 146A and 146B for suspensions 400A and 400B for suspending head sliders 2A and 2B, which contain respective magnetic heads are fixed, by hot staking, to the top and the bottom surfaces of an arm 600P, respectively, the space between magnetic disks 800A and 800B, which are read and written by the magnetic heads of the head sliders, must be increased so that the projections 520HA and 520HB formed by hot staking do not contact the magnetic disks 800A and 800B.

The method, shown in FIG.16 and FIG.17, for fixing the suspensions to the top surface and the bottom surface of the arm, cannot be applied to an intermediate arm 620 positioned between an upper arm 610 and a lower arm 630 of a comb-type arm assembly 600C shown in FIG.20. The comb-type arm assembly is, for its high rigidity, suitable for high speeds. Therefore, it would be a problem that the above method cannot be applied to the comb-type arm.

European patent application EP0,254,558 describes a magnetic disk apparatus wherein a plurality of head arms are installed integrally onto an arm supporting block, and a head assembly is fixed to these head arms by use of connecting means. The arrangement reduces the complexity of assembly, and decreases the manufacturing costs. In one embodiment the head assembly has an L-shaped mounting plate attached thereto, which enables the head assembly to be mounted on a side face of the head arm.

However, if the mounting plate of the head assembly is only fixed to the side wall of the head arm, it may not be sufficient to secure the whole of the mounting plate firmly to the head arm.

Accordingly the present invention provides a head carriage assembly comprising: a resilient suspension for a magnetic head slider to position a head across the surface of a disk; a rigid arm having a first side wall transverse to the surface of the disk; the suspension including a first mounting section parallel to a top surface of the arm and a second mounting section parallel to the first side wall of the arm; the suspension being fixed to the first side wall of the arm; the assembly being characterised by the combination of: the arm (6) having a second side wall (6SB) provided with a groove (6G); and the suspension (4) including a third mounting section (46C, 46P) which engages with the groove (6G) in the second side wall (6SB).

Preferably, if two heads are to be suspended, a first suspension for suspending one head and a second suspension for suspending the other head are fixed to a first side wall and a second side wall of the arm, respectively.

As the suspension is fixed to the side wall of the arm, there are not screw heads protruding or projections formed by hot staking on the top and the bottom surfaces of the arm and it is not necessary to make screw holes which extend from the top surface or the bottom surface into the arm perpendicularly to these surfaces, that is, in the direction of a thickness of the arm. Thus the thickness of a head carriage assembly can be decreased. If two heads are suspended, as two suspensions are fixed to the two side walls of the arm respectively and it would be unnecessary to increase the vertical size of the side walls, that is, the thickness of the arm. Thus, the thickness of the head carriage assembly can be decreased.

Viewed from a second aspect the present invention provides a disk apparatus comprising at least one disk; a motor for driving the disk; a head carriage assembly according to any preceding claim; and a head positioning device for driving the head carriage assembly to position the head to a target position on the disk.

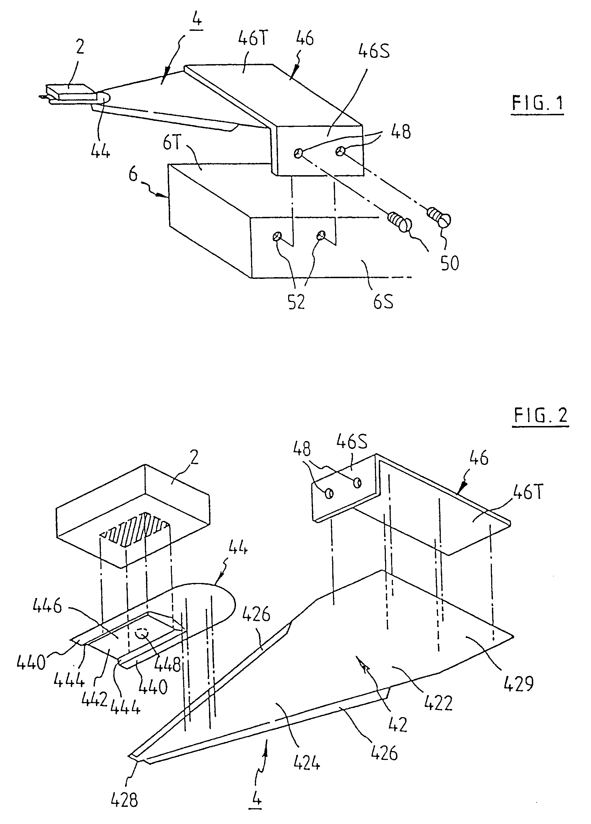

The scope of the invention is defined by the appended claims; and how it can be carried into effect is hereinafter particularly described with reference to the accompanying drawings, in which:-
Figure 1 is an exploded perspective view of a head carriage assembly;
Figure 2 is an exploded perspective view showing the details of components of the suspension shown in Fig.1;

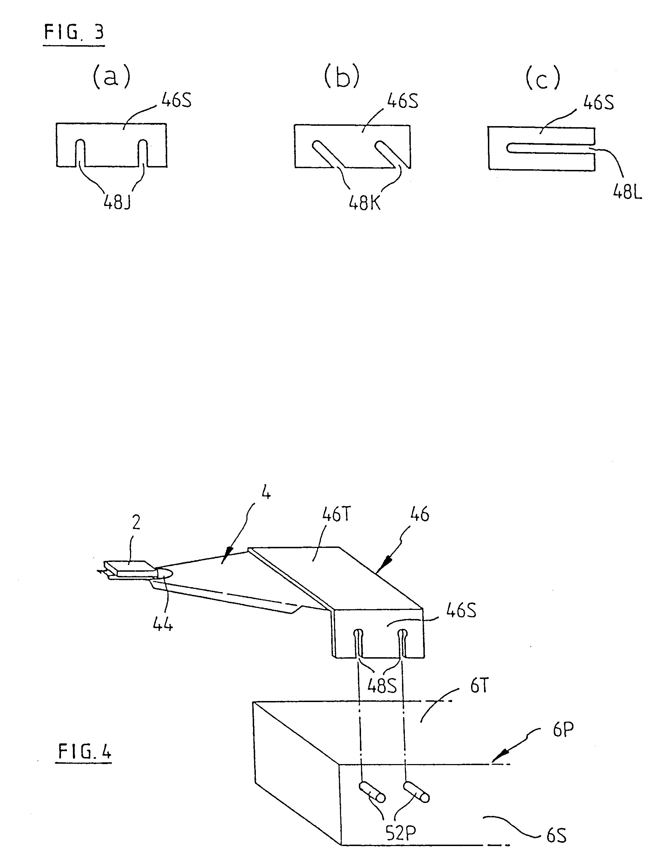

Figures 3(a), 3(b) and 3(c) are side views showing modifications of the suspension of Fig.1;
Figure 4 is an exploded perspective view of a second head carriage assembly;

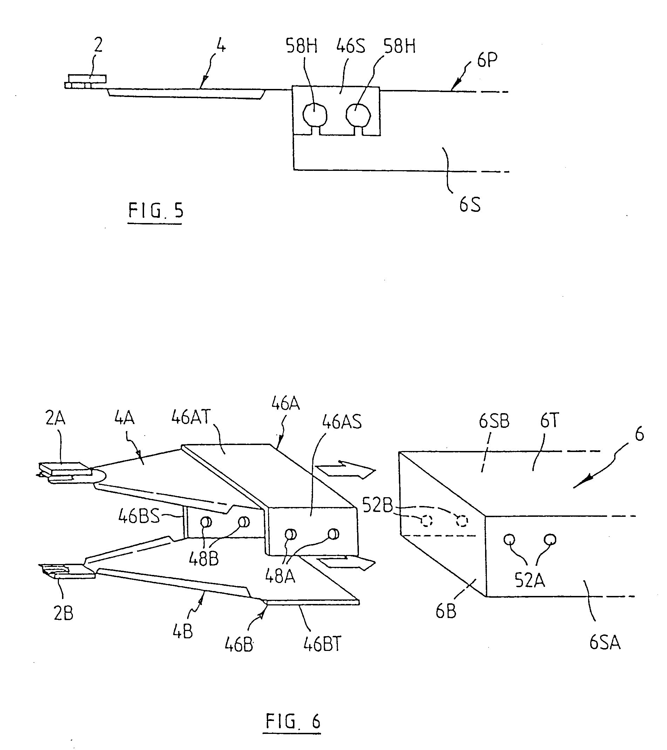

Figure 5 is a side view of the head carriage assembly of Fig.4;
Figure 6 is an exploded perspective view of a further head carriage assembly;

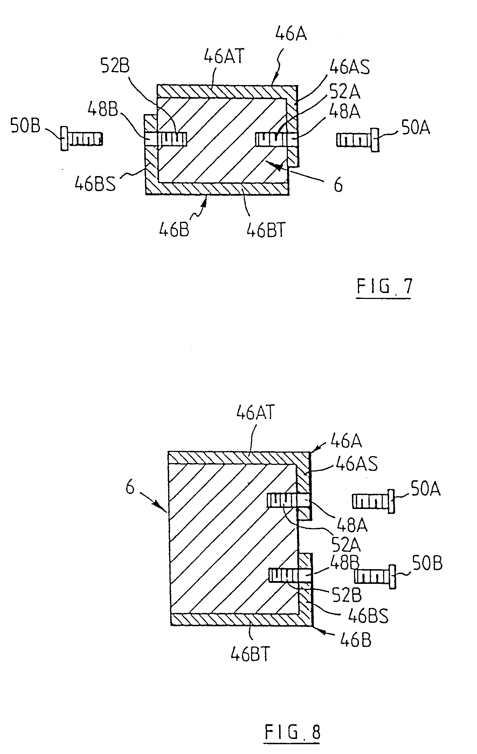

Figure 7 is a transverse sectional view of the head carriage assembly of Fig.6;
Figure 8 is a view, similar to Figure 7, of another assembly;

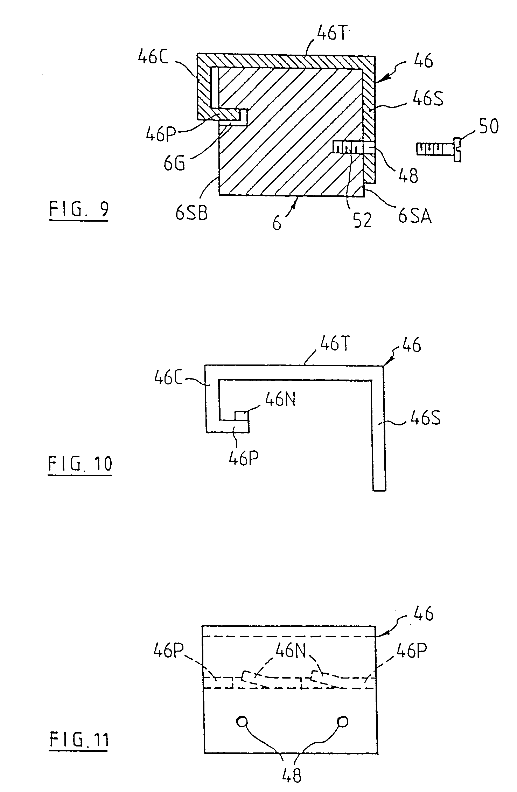

Figure 9 is a transverse sectional view of an embodiment of the present invention;
Figure 10 is a front view of a part used in the embodiment of Fig.9;

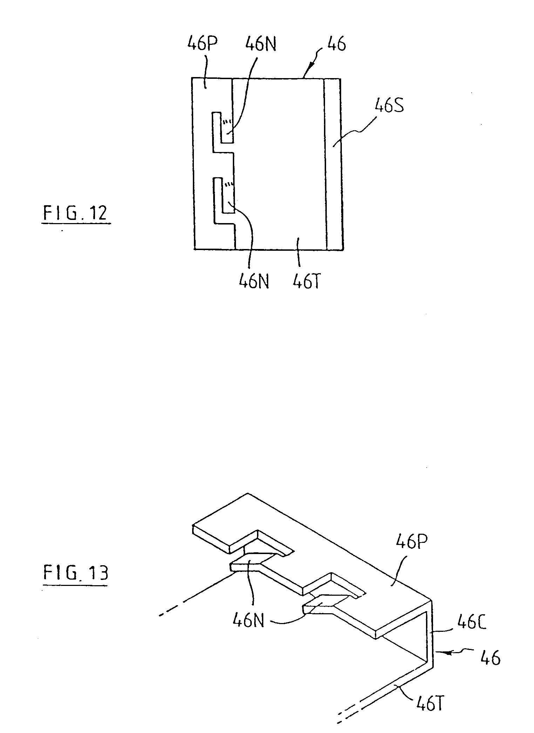

Figure 11 is a side view of the mounting plate of Fig. 10;
Figure 12 is a bottom plan view of the mounting plate of Fig.10;
Figure 13 is a perspective view of the mounting plate of Fig.10;

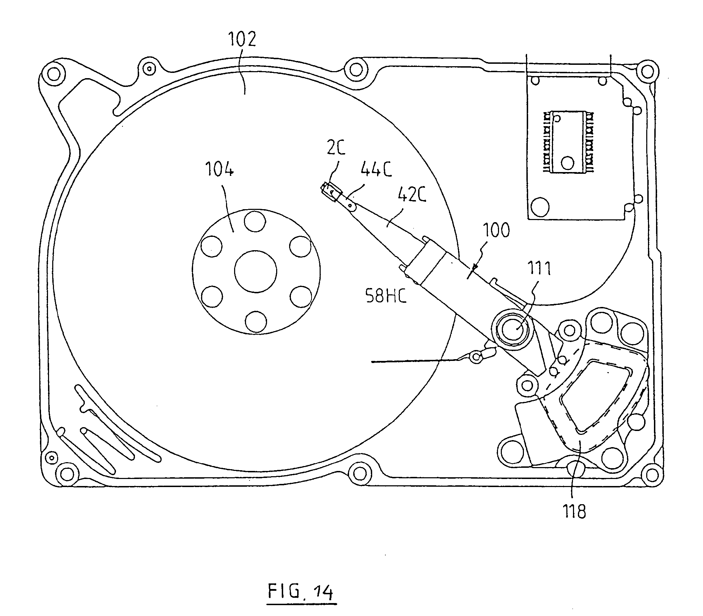

Figure 14 is a plan view sowing an embodiment of a magnetic hard disk device according to the present invention;

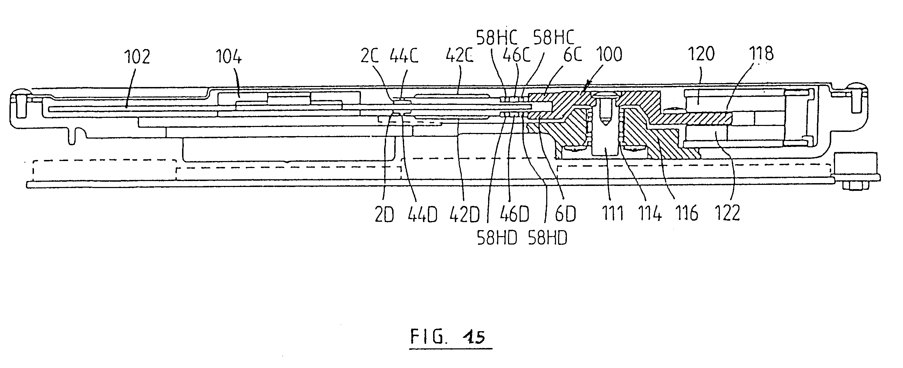

Figure 15 is a side view of tie magnetic hard disk device of Fig. 14;
Figure 16 is an exploded perspective view showing one example of a head suspension assembly according to prior art;
Figure 17 is an exploded perspective view showing another example of a head suspension assembly according to prior art;
Figure 18 is a transverse sectional view showing a head suspension assembly according to prior art;
Figure 19 is a side view showing a head suspension assembly according to prior art; and
Figure 20 is a perspective view of a comb-type arm assembly.

In the head carriage assembly of figure 1, a resilient suspension 4 supports a head slider 2 containing a magnetic head for reading or writing data from or to a magnetic disk (not shown). The suspension 4 is fixed to a side wall 6S of a rigid arm 6 made of an aluminium die casting joined to a head positioning device comprising a voice coil motor for positioning the magnetic head on a target track on the magnetic disk.

The suspension 4 (FIG.2) includes a suspension load beam 42, a flexure 44, and a mounting plate 46. The suspension load beam 42, made of stainless steel, provides a resilient spring section 422 and a triangularly shaped load beam section 424. A flange 426 is provided on each side of the load beam section 424. In the neighbourhood of the apex 428 of the triangular section of the load beam section 424, the flexure 44 is fixed by spot welding. The flexure 44 includes two resilient outer fingers 440 which run parallel to the longitudinal axis of the suspension load beam 42, a cross leg 442 having two offset sections 444 forming a plane offset from the plane defined by the two outer fingers 440, and a centre tongue 446 which extends parallel to the fingers 440 from the above offset plane of the cross leg 442 and which has a free end. In the centre tongue 446 is formed a load protuberance 448 which contacts the free end of the suspension load beam 42 at apex 428 of the triangular section. The head slider 2 is fixed by an epoxy resin on to the centre tongue 446 of the flexure 44. The suspension load beam 42, the flexure 44, and lead slider 2 are described in more detail in the US-A-4,167,765.

The cross section of the arm 6 in the transverse direction perpendicular to the longitudinal axis of the suspension 4, is rectangular. The mounting plate 46 includes a first mounting section 46T parallel to the side wall 6S of the arm 6. The plate 46 has an L-shaped cross section in the transverse direction. The first mounting section 46T is fixed, by spot welding, to a section 429 extending from and integral with the resilient spring section 422 of the suspension load beam 42. Two holes 48 are bored through the second mounting section 46S, in the side wall 6S of the arm, at positions corresponding to two holes 48. Two screws 50 pass through the two holes 48 and are screwed into the screw holes 52 in the arm 6 to fasten the suspension 4 to the side wall 6S of the arm 6.

Alternatively, the second mounting section 46S of the suspension 4 may have two slots 48J (FIG.3(a)) which extend in the vertical direction from the lower edge. In another embodiment, two slots 48K (Fig.3(b)) can be cut diagonally. In yet another embodiment (Fig.3(c)), a single slot 48L can be cut horizontally to receive both screws. If such slots are provided, the screws 50 can be loosely screwed in the screw holes prior to mounting the plate 46, and tightened after such mounting.

In the head carriage assembly of figure 4, a rigid arm 6P (FIG.4) of plastics material is used. The suspension 4 is fixed to the side wall 6S of the rigid arm 6P by-hot staking. Two keyhole shaped slots 48S are formed in the second mounting section 46S and two bosses 52P of plastics material are formed to extend from the side wall 6S of the rigid arm 6P at positions corresponding to the slots 48S. The bosses 52P, which penetrate the slots 48S and protrude from the second mounting section 46S, are molten by hot staking, and solidify into expanded heads 58H (Fig.5) larger than slots 48S so that the suspension 4 is fixed to the side wall 6S of the rigid arm 6P.

An alternative head carriage assembly has two heads carried by the arm 6 (FIGS. 6 and 7). A first suspension 4A and a second suspension 4B which support head sliders 2A and 2B containing a first and second magnetic heads, respectively, are fixed to side walls 6SA and 6SB, respectively, of the rigid arm 6 made of aluminium die casting. The first suspension 4A includes an L-shaped mounting plate 46A including a first mounting section 46AT and a second mounting section 46AS parallel to the top surface 6T and the first side wall 6SA of the arm 6, respectively. Two holes 48A are bored through the second mounting section 46AS. Two screw holes 52A are made in the first side wall 6SA of the arm 6 at positions corresponding to the two holes 48A. Two screws 50A (FIG.7) pass through the two holes 48A to penetrate the second mounting section 46AS, and are screwed into the screw holes 52A in the arm 6 to fasten the suspension 4A to the first side wall 6SA of the arm 6. The second suspension 4B includes an L-shaped mounting plate 46B including a first mounting section 46BT and a second mounting section 46BS parallel to the bottom surface 6B and the second side wall 6SB of the arm 6, respectively. Two holes 48B are bored through the second mounting section 46BS at positions corresponding to the two holes 48B. Two screws 50B (FIG.7) pass through the two holes 48B to penetrate the second mounting section 46BS, and are screwed in the screw holes 52B in the arm 6 to fasten the suspension 4B to the second side wall 6SB of the arm 6.

By fixing the two suspensions 4A and 4B to the two different side walls 6SA and 6SB of the arm 6, that is by fixing the L-shaped mounting plates 46A and 46B to the arm 6 at symmetrical positions with respect to the central axis of the arm 6, the depth of the arm 6 can be decreased compared to that needed if the second mounting sections 46AS and 46BS (FIG.8) for the suspensions 4A and 4B are fixed to only one side wall 6SA of the arm 6. The two suspensions are shown fixed to the arm by the screws, but the two suspensions can be fixed to the arm by hot staking, as shown in Fig.4.

As mentioned earlier, a rigidity problem exists if the second mounting section 46S (or 46AS and 46BS) of the mounting plate 46 (or 46A and 46B) for the suspension 4 (or 4A and 4B) is fixed only to the side wall 6S (or 6SA and 6SB) as shown in FIG.1 to FIG.7. It may not be sufficient to firmly secure the whole of the mounting plate 46, and may thus allow the other end of the mounting plate 46 to rise from the surface of the arm. To overcome this, in a first embodiment of the present invention, a groove 6G (FIG.9) parallel to the longitudinal axis of the arm 6 is formed in the second side wall 6SB opposite to the first side wall 6SA of the arm 6, to which the second mounting section 46S of the mounting plate 46 provided for the suspension 4 is fixed, and the mounting plate 46T has a third mounting section 46C having an inturned projecting section 46P which engages in the groove 6G to ensure that the mounting plate 46 is fastened to the arm 6 at both ends.

To prevent the projection section 46P from leaving the groove 6G easily, two resilient claws 46N may be crooked from the projecting section 46P (FIGS.10 and 11). The resilience of the claws 46N ensures firm engagement with the sides of the groove 6G so that the mounting plate 46 is secured to the arm 6. The number of the claws 46N may be varied. The claws 46N are formed by slotting the section 46P as shown in FIG.12 and bending as shown in FIG.13.

A head carriage assembly 100 (FIG.14) according to the preferred embodiment of the invention is incorporated in a magnetic hard disk device. The assembly 100 includes head sliders 2C and 2D (FIG.15) including magnetic heads for reading data from or writing data to the front surface or back surface of a magnetic hard disk 102. Flexures 44C and 44D support tie sliders 2C and 2D, respectively, and are carried by suspension load beams 42C and 42D. The latter have mounting plates 46C and 46D attached to the side walls of rigid arms 6C and 6D, respectively.

The second mounting sections of the mounting plates 46C and 46D are fixed to the side walls of the arms 6C and 6D, respectively, by hot staking bosses to form heads 58HC and 58HD which after melting expand and solidify.

The magnetic hard disk 102 is driven, through a spindle 104, by a spindle motor 106. The head carriage assembly 100 is fixed to a shaft 111. The shaft 111 is mounted, through bearings 114, to a housing base 116 so that the head carriage assembly 100 can pivot with respect to the central axis of the shaft 111. The attachment of the head carriage assembly 100 to the shaft 111 is conventional. On the opposite side, with respect to the central axis of the shaft 111, to the side to which the head sliders 2C and 2D of the head carriage assembly 100 are mounted, a coil 118 is fixed. Above the coil 118 a permanent magnet 120 is disposed at a predetermined distance from the coil 118. Below the coil 118 a-permanent magnet 122 is disposed at a predetermined distance from the coil 118. The coil 118 and the permanent magnets 120 and 122 constitute a voice coil motor, that is, a head positioning device. Current flowing in the coil 118 and a magnetic field produced by the permanent magnets 120 and 122 cause magnetic forces which drive the head carriage assembly 100 with respect to the central axis of the shaft 111.

It will be appreciated that two suspensions may be attached to a single arm. It will also be appreciated that the number of arms to which suspensions are fixed is not limited and a suspension can be attached also to an intermediate arm 620 in a comb-type arm assembly 600C, as shown in FIG.20. It will further by appreciated that instead of screws or hot staking, welding, pressurizing, and spring force may be used to fix the mounting plate to the arm.

As is clear from the foregoing description, according to the present invention, a projection for fixing a suspension to an arm is not formed on the top surface or the bottom surface of the arm because the suspension is fixed to a side wall of the arm. In addition, making screw holes for fixing the suspension in the direction of the thickness of the arm is not needed, so that the thickness of the head carriage assembly can be decreased. Further, if two heads are supported, it is unnecessary to increase the thickness of the arm, because the two suspensions are fixed to two opposite side walls of the arm. Thus, the thickness of a head carriage assembly can be decreased. To ensure that the mounting plate is firmly secured a groove is formed in the side wall of the arm opposite to the side wall at which the suspension is fixed, and a projecting section on the mounting plate engages in the groove.

## Claims

1. A head carriage assembly comprising:
a resilient suspension (4) for a magnetic head slider (2) to position a head across the surface of a disk;
a rigid arm (6) having a first side wall (6S) transverse to the surface of the disk;
the suspension (4) including a first mounting section (46T) parallel to a top surface (6T) of the arm and a second mounting section (46S) parallel to the first side wall (6S) of the arm (6);
the suspension (4) being fixed to the first side wall (6S) of the arm (6);
the assembly being characterised by the combination of:
the arm (6) having a second side wall (6SB) provided with a groove (6G); and
the suspension (4) including a third mounting section (46C, 46P) which engages with the groove (6G) in the second side wall (6SB).

2. An assembly according to Claim 1, wherein the arm (6) has a rectangular cross-section, and the first and second mounting sections (46T, 46S) form an L-shaped mounting plate (46).

3. An assembly according to Claim 1 or Claim 2, wherein the third mounting section (46C, 46P) includes claw means (46N) which engages with the groove (6G).

4. An assembly according to Claim 3, wherein the projecting section (46N) is formed of a resilient finger or fingers crooked from the third mounting section (46P).

5. An assembly according to any preceding claim, wherein the first side wall also has a groove provided therein, and the assembly further includes a second suspension (4B) for suspending a second head slider, the second suspension (4B) including a first mounting section parallel to a bottom surface of the arm, a second mounting section parallel to the second side wall of the arm, and a third mounting section for engaging with the groove in the first side wall, wherein the second suspension is fixed to the second side wall (6SB) of the arm by its first mounting section, and engages the first side wall by its third mounting section.

6. An assembly according to Claim 5, wherein the first and second suspensions are arranged symmetrically opposite with respect to the central axis of the arm.

7. A disk apparatus comprising: at least one disk (102); a motor for driving the disk; a head carriage assembly according to any preceding claim; and a head positioning device for driving the head carriage assembly to position the head to a target position on the disk.

## Patentansprüche

1. Eine Kopfwagenbaugruppe, enthaltend:
Eine elastische Aufhängung (4) für einen Magnetkopfgleiter (2), um einen Kopf über der Oberfläche einer Platte zu positionieren;
ein steifer Arm (6) mit einer erste Seitenwand (6S), die quer zur Oberfläche der Platte steht;
wobei die Aufhängung (4) einen ersten Befestigungsabschnitt (46T) parallel zu einer oberen Fläche (6T) des Arms, und einen zweiten Befestigungsabschnitt (46S) parallel zur ersten Seitenwand (6S) des Arms (6) aufweist;
die Aufhängung (4) an der ersten Seitenwand (6S) des Arms (6) befestigt ist;
und die Anordnung dadurch gekennzeichnet ist, daß der Arm (6) eine zweite Seitenwand (6SB) aufweist, die mit einer Nut (6G) versehen ist; und
die Aufhängung (4) einen dritten Befestigungsabschnitt (46C, 46P) aufweist, der-in die Nut (6G) in der zweiten Seitenwand (6SB) eingreift.

2. Eine Anordnung gemäß Anspruch 1, bei der der Arm (6) einen rechteckigen Querschnitt aufweist, und erste und zweite Befestigungsabschnitte (46T, 46S) eine L-förmige Tragplatte (46) bilden.

3. Eine Anordnung gemäß Anspruch 1 oder Anspruch 2, bei der der dritte Befestigungsabschnitt (46C, 46P) ein Klauenmittel (46N) aufweist, das in die Nut (6G) eingreift.

4. Eine Anordnung gemäß Anspruch 3, bei der der vorstehende Abschnitt (46N) von einem oder mehreren elastischen Fingern gebildet wird, die vom dritten Befestigungsabschnitt (46P) aus hochgebogen sind.

5. Eine Anordnung gemäß einem beliebigen der vorstehenden Ansprüche, bei der die erste Seitenwand ebenfalls mit einer darin ausgebildeten Nut versehen ist, und die Anordnung ferner eine zweite Aufhängung (4B) zum Aufhängen eines zweiten Kopfgleiters beinhaltet, wobei die zweite Aufhängung (4B) einen ersten Befestigungsabschnitt, der sich parallel zu einer unteren Fläche des Arms erstreckt, einen zweiten Befestigungsabschnitt, der sich parallel zur zweiten Seitenwand des Arms erstreckt, und einen dritten Befestigungsabschnitt zum Eingriff in die Nut in der ersten Seitenwand aufweist, worin die zweite Aufhängung mit ihrem ersten Befestigungsabschnitt an der zweiten Seitenwand (6SB) des Arms befestigt ist und mit diesem dritten Befestigungsabschnitt in die erste Seitenwand eingreift.

6. Eine Anordnung gemäß Anspruch 5, bei der die erste und die zweite Aufhängung im Hinblick auf die Mittelachse des Arms einander symmetrisch gegenüberliegend angeordnet sind.

7. Ein Plattengerät, das umfaßt: Wenigstens eine Platte, (102); einen Antriebsmotor für die Platte, eine Kopfwagenbaugruppe gemäß einem beliebigen der vorstehenden Ansprüche; und eine Kopfpositioniervorrichtung zum Schieben der Kopfwagenbaugruppe, so daß der Kopf in eine Zielstellung auf der Platte positioniert wird.

## Revendications

1. Un assemblage de support de tête comprenant:
une suspension flexible (4) à glissière pour tête magnétique (2) destinée à positionner une tête par rapport à la surface d'un disque ;
un bras rigide (6) ayant une première paroi (6S) transversale à la surface du disque ;
la suspension (4) comprenant une première section de montage (46T) parallèle à la surface supérieure (6T) du bras et une seconde section de montage (46S) parallèle à la première paroi latérale (6S) du bras (6) ;
la suspension (4) étant fixée à la première paroi (6S) du bras (6) ;
le montage étant caractérisé par la combinaison selon laquelle :
le bras (6) a une seconde paroi latérale (6SB) pourvue d'une encoche (6G) ; et
la suspension (4) inclue une troisième section de montage (46C, 46P) s'engageant dans la gorge (6G) de la seconde paroi latérale (6SB).

2. Assemblage selon la revendication 1 dans lequel le bras (6) a une section rectangulaire, et les première et seconde sections de montage (46T, 46S) forment une plaque de montage en L (46).

3. Assemblage selon la revendication 1 ou la revendication 2 dans lequel la troisième section de montage (46C, 46P) comprend une griffe (46N) s'engageant dans l'encoche (6G).

4. Assemblage selon la revendication 3 dans lequel la griffe (46N) est formée d'un ou plusieurs doigts flexibles recourbés à partir de la troisième section de montage (46P).

5. Assemblage selon l'une quelconque des revendications précédentes, dans lequel la première paroi latérale est aussi pourvue d'une encoche, l'assemblage comprenant en outre un second support (4B) pour supporter une seconde glissière de tête, le second support (4B) comprenant une première section de montage parallèle à la surface inférieure du bras, une seconde section de montage parallèle à la seconde paroi latérale du bras, et une troisième section de montage destinée à s'engager dans la rainure de la première paroi latérale, d'où le second support est fixé à la seconde paroi latérale (6SB) du bras par sa première section de montage, et s'engage dans la première paroi latérale grâce à sa troisième section de montage.

6. Assemblage selon la revendication 5, dans lequel les premier et second supports sont disposés de façon à être symétriquement opposés par rapport à l'axe central du bras.

7. Dispositif à disque comprenant : au moins un disque (102) ; un moteur destiné à faire tourner le disque ; un assemblage support de tête selon l'une quelconque des revendications précédentes ; et un dispositif de positionnement de tête destiné à commander l'assemblage support de tête de façon à positionner la tête selon une position cible du disque.
